# EUROPÄISCHE PATENTSCHRIFT

(11) **EP 2 334 399 B1**
(45) Veröffentlichungstag und Bekanntmachung des Hinweises auf die Patenterteilung: **27.04.2016**
(21) Anmeldenummer: 09741257.1
(22) Anmeldetag: 30.09.2009
(51) Int. Cl.: B01D 46/00, B01D 29/11, B29C 65/14, B29C 65/16, B29C 45/16, B29L 31/14, B29C 65/00, B29K 77/00, B29C 35/08, B29K 101/12

(54) **VERFAHREN ZUM HERSTELLEN EINER FILTERENDSCHEIBE UND EINES FLUIDFILTERS, FILTERENDSCHEIBE**
METHOD FOR MANUFACTURING A FILTER END DISC AND A FLUID FILTER, FILTER END DISC
PROCÉDÉ DE FABRICATION D'UN DISQUE TERMINAL DE FILTRE ET D'UN FILTRE À FLUIDE, DISQUE TERMINAL DE FILTRE

(30) Priorität: 30.09.2008 DE 102008049627
(43) Veröffentlichungstag der Anmeldung: 22.06.2011
(73) Patentinhaber: Mann + Hummel GmbH, 71638 Ludwigsburg (DE)
(72) Erfinder: KREINER, Anton, 94419 Reisbach (DE); ROHRMEIER, Josef, 84082 Laberweinting (DE); PFLÜGER, Frank, 74343 Sachsenheim (DE)
(86) Internationale Anmeldenummer: PCT/EP2009/062667
(87) Internationale Veröffentlichungsnummer: WO 2010/037767

(56) Entgegenhaltungen:
- EP-A- 1 695 751
- WO-A-2008/015092
- WO-A-2008/044826
- US-A1- 2006 016 746
- DASSOW J: "FUER ALLE FAELLE GERUESTET. TECHNOLOGIEFUEHRERSCHAFT DURCH MEHRKOMPONENTENTECHNIK" KUNSTSTOFFE, CARL HANSER VERLAG, MUNCHEN, DE, Bd. 92, Nr. 9, 1. September 2002 (2002-09-01), Seiten 105-109, XP001125593 ISSN: 0023-5563

## Beschreibung

Die vorliegende Erfindung betrifft ein Verfahren zum Herstellen einer Filterendscheibe, wie sie zum Beispiel für einen Fluidfilter bei einem Kraftfahrzeug benötigt wird. Häufig werden zylinderförmige Fluidfilter eingesetzt, bei denen zwischen zwei Filterendscheiben ein mit Längsfalten versehenes Filtermaterial angeordnet ist. Solche Filter dienen beispielsweise als Kraftstofffilter oder auch als Luftfilter im Pkw oder Lkw.

### Stand der Technik

Üblicherweise werden scheibenförmige Filterendplatten aus Kunststoff in einem Spritzgussverfahren gefertigt und anschließend mit einem Tubus aus gefaltetem Filtervliesmaterial verbunden. Dabei kann auf die ober- und unterseitigen Faltenprofile und/oder Endscheiben, zum Beispiel Klebstoff, aufgebracht werden, der einen fluiddichten Abschluss gewährleistet.

Da teilweise insbesondere thermoplastische Kunststoffe für die Endscheiben verwendet werden, besteht auch die Möglichkeit, die filtermediumseitige Seite der Filterendplatte zu erhitzen, wodurch das Thermoplast schmilzt. In die teilweise angeschmolzene Filterendplatte wird dann das Faltenprofil hinein gedrückt, und es bildet sich nach erneutem Erstarren des Kunststoffmaterials ein möglichst dichter Abschluss. Ein Problem bei dem letztgenannten Verfahren ist die möglichst schnelle und dennoch gleichmäßige Erwärmung der Filter-end-platte, damit die Faltkanten hinein gedrückt werden können. Um einen fluiddichten Abschluss zu erzielen, muss zumindest eine gewisse Schichttiefe der Endplatte geschmolzen werden, was bei einer Serienproduktion von entsprechenden Fluidfiltem den Herstellungsprozess bremst.

Beispielsweise ist aus der EP 1 695 751 A1 ein Verfahren zum Herstellen einer Kunststoffendscheibe bekannt, bei welchem zwei im Wesentlichen planparallel zueinander angeordnete Kunststofflagen miteinander verschweißt werden, wobei eine Kunststofflage starr und die andere Kunststofflage elastisch ausgebildet ist. Außerdem ist beispielhaft der Fachartikel " Für alle Fälle gerüstet - Technologieführerschaft durch Mehrkomponententechnik" (Kunststoffe International, Vol. 92, Nr. 9, Seiten 105 - 109; Carl Hanser Verlag, München) zu nennen, welcher allgemein verschiedene Mehrkomponentenspritztechniken, insbesondere das sogenannte Monosandwich-Verfahren, beschreibt.

Es ist daher eine Aufgabe der vorliegenden Erfindung, ein verbessertes Verfahren zum Herstellen von Filterendscheiben bereitzustellen.

### Offenbarung der Erfindung

Daher ist ein Verfahren zum Herstellen einer Filterendscheibe, wie zum Beispiel für einen Fluidfilter eines Kraftfahrzeuges, offenbart, wobei ein erstes Kunststoffformmaterial und ein zweites Kunststoffformmaterial gemäß einem Monosandwich-Verfahren oder Co-Injektionsverfahren derart in eine Werkzeugform gespritzt werden, dass das zweite Kunststoffformmaterial im Wesentlichen von dem ersten Kunststoffformmaterial umschlossen wird.

Es hat sich das Monosandwich-Verfahren oder Co-Injektionsverfahren als besonders geeignet erwiesen, wobei das erste und das zweite Kunststoffformmaterial in die Werkzeugform gespritzt werden. Im Unterschied zu einem 2-Komponenten-Spritzguss erfolgt das Einbringen der beiden Komponenten bzw. Kunststoffformmaterialien mit einem Schneckenhub und nicht nacheinander mit 2 separaten Spritzaggregaten in einem Wendewerkzeug oder durch Umsetzen.

Das innere Volumen der Werkzeugform, in die das erste und zweite Kunststoffformmaterial gespritzt wird, ist während des Einspritzens vorzugsweise konstant. Das heißt, dass die Werkzeugform hinsichtlich ihrer inneren Geometrie während des Monosandwich-Einspritztens oder Co-Injektions-Einspritzens nicht verändert wird. Bei einem zweiteiligen Werkzeug wird dasselbe zum Beispiel ausschließlich zum Entnehmen der gespritzten Filterendscheibe geöffnet.

Bei konventionellen Spritzgussverfahren, die mehrkomponentige Spritzgussteile liefern, wird häufig die Form selbst während des Einspritzens verändert. Üblich sind zum Beispiel zylindrische Werkzeugformen deren inneres zylindrisches Volumen zum Verteilen der flüssigen eingespritzten Kunststoffformmassen verkleinert wird. Derartige ineinandergreifende stempelartige Werkzeuge sind bei dem vorgeschlagenen Verfahren nicht notwendig. Das Herstellungsverfahren ist daher schneller und einfacher zu implementieren.

Das erste Kunststoffformmaterial ist bei einer Variante des Verfahrens im festen Zustand wasser- und/oder wasserdampfundurchlässig. Dadurch wird ein Schutz des zweiten Kunststoffformmaterials erreicht, welches in der Regel den inneren Kern der Endscheibe bildet. Falls das zweite Kunststoffformmaterial im festen Zustand hygroskopische Eigenschaften hat, wird eine Einlagerung von Wasser verhindert. Dies ist insbesondere von Vorteil, wenn das innere Kunststoffformmaterial in weiteren Prozessierungen erhitzt oder aufgeschmolzen werden muss, da Wasser ansonsten störende Blasen werfen könnte. Insofern werden die Lager- und Verarbeitungseigenschaften verbessert.

Als inneres Kernmaterial, also zweites Kunststoffformmaterial, kann zum Beispiel Polyamid verwendet werden, welches einerseits einfach und günstig zu verarbeiten ist, andererseits jedoch wasseranziehend bzw. hygroskopisch ist. Durch die Wahl eines ersten wasserundurchlässigen Kunststoffformmaterials, wie zum Beispiel Polypropylen wird mittels dem Monosandwich-Verfahren oder Co-Injektionsverfahren eine geschlossene dichte Oberfläche erzielt. Das erste Kunststoffformmaterial umschließt dann zum Beispiel in der Art einer Folie oder Haut das zweite Kunststoffformmaterial.

Die Kunststoffformmaterialien werden ferner vorzugsweise derart gewählt, dass das zweite Kunststoffformmaterial eine Strahlung mit vorgegebenen Strahlungseigenschaften stärker in Wärme umsetzt als das erste Kunststoffformmaterial.

Bei einer weiteren Variante des Verfahrens ist die Werkzeugform derart geformt, dass beim Einspritzen das erste Kunststoffformmaterial in Aussparungen der Werkzeugform eindringt und diese derart ausfüllt, dass aus dem verfestigten ersten Kunststoffformmaterial ein von einer Stirnseite der Filterendscheibe abstehendes Dichtungselement entsteht.

Die Aussparung in dem Formwerkzeug bzw. der Werkzeugform führt zum Beispiel zu einer Dichtlippe auf einer Stirnseite der fertigen Filterendscheibe. Es ist insbesondere vorteilhaft, wenn das von der Filterendscheibe abstehende Dichtungselement ausschließlich das erste Kunststoffformmaterial umfasst, und optional ferner das erste Kunststoffformmaterial im festen Zustand weicher und/oder flexibler ist als das zweite Kunststoffformmaterial im festen Zustand.

Das sich ergebende Dichtelement wird bei der weiteren Verarbeitung zum Beispiel an- oder aufgeschmolzen, und der Rand oder das Faltenprofil eines zylinderförmigen Faltenpacks wird hineingedrückt und verbindet sich nach dem Erkalten fluiddicht.

Bei einem Ausführungsbeispiel des Verfahrens und einer Filterendscheibe sind mehrere konzentrische, von der Filterendscheibe abstehende Dichtstege oder Dichtungslippen vorgesehen.

Zum Beispiel bei der Verwendung von thermoplastischem Material als Kunststoffformmaterialien ergibt sich durch das nacheinander vollzogene Einspritzen in die Werkzeugform, dass das erste Kunststoffformmaterial an den Innenwänden der Werkzeugform beim Einspritzvorgang erstarrt und im Wesentlichen das zweite Kunststoffformmaterial einen inneren Kern der derart gefertigten Filterendscheibe bildet. Durch die Auswahl der beiden Kunststoffformmaterialien mit vorgegebenen Eigenschaften hinsichtlich der energetischen Umsetzung einer eingestrahlten Strahlung in Wärmeenergie kann eine besonders günstige, erneute Aufschmelzung der Filterendscheibe in weiteren Verarbeitungsschritten zum Ausbilden eines vollständigen Fluidfilters erzielt werden.

Insbesondere Polyamid als thermoplastisches Material eignet sich als Filterendscheibenmaterial und zum Einspritzen in eine Werkzeugform. Um die gewünschten Absorptions-, Reflektions- und Transmissionseigenschaften der beiden Kunststoffformmaterialien zu erzielen, kann zum Beispiel das erste Kunststoffformmaterial derart gewählt werden, dass es einen niedrigeren Absorptionsgrad hat als das zweite Kunststoffformmaterial. Das erste Kunststoffformmaterial hat vorzugsweise ferner einen niedrigeren Reflektionsgrad als das zweite Kunststoffformmaterial. Das erste Kunststoffformmaterial kann zudem einen höheren Transmissionsgrad als das zweite Kunststoffformmaterial haben. Dabei versteht sich der Absorptions-, Reflektions- und Transmissionsgrad jeweils bezüglich einer vorgegebenen Strahlung.

Die Strahlung kann zum Beispiel Wärmestrahlung von einem Infrarotstrahler z.B. Laser, Glühwendel oder Leuchtdiodenarray sein. Als mögliche Wellenlängen der Infrarot-Strahlung kommen 780 bis 3000 nm insbesondere 900 nm bis 1500 nm oder auch schmalbandiger 900 nm bis 1100 nm in Frage, die auch bei üblichen Schweißverfahren mit Kunststoff Ver wendung finden.

Dadurch, dass das äußere erste Kunststoffformmaterial im Wesentlichen transparenter ist, dringt eine eingestrahlte Wärmestrahlung zunächst durch die äußere Oberfläche der Filterendscheibe hindurch und erhitzt dann an der Grenzfläche zwischen den beiden Kunststoffformmaterialien einen unterhalb der Oberfläche liegenden Bereich der Filterendscheibe. Dadurch ergibt sich eine besonders günstige Temperaturprofileinstellung, was es erleichtert, zum Beispiel ein Filtermaterial mit der Filterendscheibe zu verbinden.

In einer Variante des Verfahrens erfolgt ferner ein Einfärben des ersten und des zweiten Kunststoffformmaterials derart, dass die jeweiligen Absorptions-, Reflektions- und/oder Transmissionseigenschaften für die Strahlung im Wesentlichen unverändert bleiben. Die Kunststoffformmaterialien weisen jedoch dennoch dieselbe Farbe auf. Dadurch kann visuell nicht erkannt werden, dass die Filterendscheibe aus zwei Komponenten, nämlich dem ersten und dem zweiten Kunststoffformmaterial aufgebaut ist. Es existieren insbesondere geeignete Farbstoffe, die transparent für Infrarotstrahlung sind und somit praktisch keinen Einfluss auf das Temperaturprofil senkrecht zu einer Oberfläche der Filterendscheibe haben.

Das zweite Kunststoffformmaterial kann zum Beispiel aus dem ersten Kunststoffformmaterial gebildet werden, indem Rußpartikel zum Erhöhen des Absorptionsgrades beigefügt werden. Dies hat zum Beispiel den Vorteil, dass sich die rheologischen Eigenschaften beider Kunststoffformmaterialien unwesentlich unterscheiden und eine Verarbeitung, beispielsweise in der Spritzgussmaschine besonders leicht ist.

Es wird ferner ein Verfahren zum Herstellen eines Fluidfilters vorgeschlagen. Dabei wird zunächst ein wie zuvor angedeutetes Verfahren zum Herstellen einer Filterendscheibe durchgeführt. Anschließend erfolgt ein Bestrahlen der Filterendscheibe durch eine Strahlung mit den vorgegebenen Strahlungseigenschaften zum Schmelzen des ersten Kunststoffformmaterials. Dann wird ein Filtermaterial auf das zumindest teilweise geschmolzene erste Kunststoffformmaterial aufgebracht. Beispielsweise kann ein gefalteter Rand des Filtermaterials in das geschmolzene erste Kunststoffformmaterial hinein gedrückt werden.

Die vorliegende Erfindung umfasst ferner einen Kraftfahrzeugfluidfilter, welcher nach dem zuvor offenbarten Verfahren hergestellt ist.

Ferner wird eine Filterendscheibe, insbesondere für einen Fluidfilter eines Kraftfahrzeugs, welche nach einem Monosandwichverfahren oder Co-Injektionsverfahren gefertigt ist, beansprucht. Dabei ist ein erstes äußeres Kunststoffformmaterial und ein zweites inneres Kunststoffformmaterial vorgesehen, wobei das zweite Kunststoffformmaterial von dem ersten Kunststoffformmaterial umschlossen ist. Das erste Kunststoffformmaterial ist dann wasser- und/oder wasserdampfundurchlässig.

Das zweite Kunststoffformmaterial kann, wie zum Beispiel Polyamid, hygroskopisch sein, und das erste Kunststoffformmaterial kann, wie zum Beispiel modifiziertes Polypropylen, wasserundurchlässig sein. Die beiden Kunststoffformmaterialien sind derart ausgewählt, dass sie insbesondere in einem Monosandwichverfahren verarbeitbar sind und in der Filterendscheibe aneinander haften.

Insofern bildet das erste Kunststoffformmaterial vorzugsweise eine geschlossene wasserund/oder wasserdampfdichte äußere Oberfläche der Filterendscheibe.

Erfindungsgemäß ist auch eine Filterendscheibe mit einem ein ersten äußeren Kunststoffformmaterial und einem zweiten inneren Kunststoffformmaterial, wobei das zweite Kunststoffformmaterial von dem ersten Kunststoffformmaterial umschlossen ist. Die Umschließung kann hierbei vollständig sein, insbesondere wenn das erste Kunststoffformmaterial wasserdampfdicht ist, oder in alternativen Ausgestaltungen auch nur teilweise vorliegen, z.B. an einer flachen Seite der Filterendscheibe zu 50% der Fläche, bevorzugt zu mehr als 90% der Fläche vorliegen.

Das erste Kunststoffformmaterial kann bei der Filterendscheibe in einem Wellenlängenbereich, z.B. Infrarot, eine geringere Absorption besitzen als das zweite Kunststoffmaterial. Beim Bestrahlen mit dieser Wellenlänge wird dann der Kern oder das zweite Kunststoffmaterial stärker erwärmt als das äußere Kunststoffmaterial, das den Kern umschließt. Das erste, äußere Kunststoffmaterial kann einen niedrigeren Erweichungspunkt oder Schmelzpunkt besitzen als das zweite, innere Kunststoffmaterial. In jedem Fall kann durch die Erwärmung des zweiten, inneren Kunststoffmaterials das erste, äußere Kunststoffmaterial so erwärmt werden, dass eine Verbindung mit einem Faltenbalg ermöglicht wird.

Eine besonders starke Erwärmung kann z.B. an einer der Grenzflächen vom ersten Kunststoffmaterial mit dem zweiten Kunststoffmaterial auf der Seite des zweiten Kunststoffmaterials realisiert werden.

Weiterhin umfasst die vorliegende Erfindung einen Kraftfahrzeugfluidfilter mit einer Filterendscheibe wie in den verschiedenen Ausführungsformen beschrieben. Insbesondere einen Kraftfahrzeugfluidfilter mit einem Faltenbalg, insbesondere einem sterngefalteten Faltenbalg. Insbesondere umfasst die Erfindung einen Öl- oder Kraftstofffilter mit einer oder mehreren beschriebenen Filterendscheiben.

Weitere mögliche Implementierungen der Erfindung umfassen auch nicht explizit genannte Kombinationen von zuvor oder im Folgenden bezüglich der Ausführungsbeispiele beschriebenen Merkmale, Verfahrensschritte oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele.

### Kurze Beschreibung der Zelchnungen

Im Weiteren wird die Erfindung anhand beispielhafter Ausführungsformen unter Bezugnahme auf die beigelegten Figuren näher erläutert. Es zeigt dabei:
Figur 1: eine Abfolge von Verfahrensschritten zum Herstellen einer Filterendscheibe;
Figur 2: eine perspektivische Ansicht einer Filterendscheibe und deren Strahlungsabsorptionseigenschaften;
Figur 3: ein Diagramm zur Erläuterung des Temperaturprofils bei Wärmeeinstrahlung auf eine Filterendscheibe;
Figur 4: eine Schnittansicht eines Spritzgusswerkzeuges für ein Monosandwich-Verfahren zum Herstellen einer Filterendscheibe;
Figur 5: eine Darstellung des Spritzgusswerkzeuges während eines Einspritzvorganges nach einem Monosandwich-Verfahren;
Figur 6: eine detaillierte Schnittansicht während eines Einspritzvorgangs einer zweikomponentigen Kunststoffformmasse;
Figur 7: eine perspektivische Ansicht eines Kraftfahrzeugfluidfilters;
Figur 8: eine Schnittansicht eines Kraftfahrzeugfluidfilters;
Figur 9: eine angeschnittene perspektivische Ansicht einer Filterendscheibe; und
Figur 10: eine Schnittansicht eines weiteren Spritzgusswerkzeuges für ein MonosandwichVerfahren zum Herstellen einer Filterendscheibe.

In den Figuren sind gleiche oder funktionsgleiche Elemente mit denselben Bezugszeichen versehen worden, sofern nichts anderes angegeben ist.

### Ausführungsform(en) der Erfindung

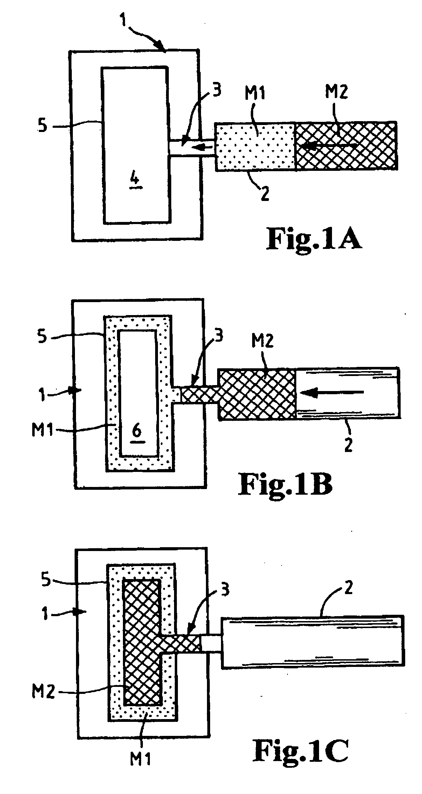

In der Figur 1 sind Verfahrensschritte für ein Verfahren zum Herstellen einer Filterendscheibe dargestellt. Figur 1 zeigt eine Werkzeugform 1 mit einem Hohlraum 4, der von einer Hohlraumwandung 5 umschlossen ist. Der Hohlraum 4 wird mit erhitztem thermoplastischem Kunststoffformmaterial, wie beispielsweise geeignetem Polyamid ausgefüllt zum Ausbilden der Filterendscheibe. Dazu ist in der Werkzeugform 1 eine Öffnung 3 vorgesehen, an die ein Extruder 2 angekoppelt ist, in den die Kunststoffformmaterialien M1 und M2 eingefüllt werden können. Beispielsweise mit einem Stempel oder Schnecke oder einer anderen geeignete Fördereinrichtung kann die Materialabfolge M1 und M2 in die Werkzeugform 1 gespritzt werden.

Figur 1A zeigt eine Situation vor dem Einspritzen der beiden Kunststoffformmaterialien M1, M2 in die Werkzeugform 1. Das erste Kunststoffformmaterial M1, welches später eine Außenhülle der Filterendscheibe bilden soll, ist derart in den Extruder 2 eingefüllt, dass es beim Einspritzen als erstes durch die Öffnung 3 in den Hohlraum 4 der Werkzeugform 1 gelangt. Hinter dem ersten Kunststoffformmaterial M1 ist ein zweites Kunststoffformmaterial M2 vorgesehen, das beispielsweise ebenfalls Polyamid aufweist, das sich durch geeignete Zusätze zum Beispiel hinsichtlich seiner Strahlungsabsorptionseigenschaften von dem ersten Material M1 unterscheidet. Die Materialien M1 und M2 sind so in den Extruder 2 eingefüllt, dass sie nacheinander in die Öffnung 3 in die Werkzeugform 1 gepresst werden können.

Das Material M1 kann beispielsweise auch als wasserundurchlässiges Material, wie Polypropylen, gewählt werden. Dadurch kann, wie im Weiteren erläutert ist, eine Schutzhülle um das Material M2 erzeugt werden, welches wasseranziehend, also hygroskopisch ist. Eine ungewünschte Einlagerung von Wasser bei der Lagerung der hergestellten Endscheiben wird dann verhindert. Um eine Verträglichkeit der beiden Kunststoffformmaterialien M1, M2 miteinander mit den gewählten Eigenschaften zu gewährleisten, wird beispielsweise modifiziertes Polypropylen vom Typ Admer QB510E als M1 und Polyamid als M2 verwendet.

Die Figur 1B illustriert den Einspritzvorgang für das erste Kunststoffformmaterial M1, welches im heißen, im Wesentlichen flüssigen Zustand, in die Werkzeugform 1 eingeführt wird. Da sich an den Rändern bzw. der Oberfläche 5 der Innenwandung 5 im Hohlraum 4 der Werkzeugform 1 das als erstes eingespritzte Kunststoffformmaterial M1 erstarrt, verteilt sich das erste Kunststoffformmaterial M1 im Wesentlichen um die Innenwandung 5. Erst anschließend wird das zweite Kunststoffformmaterial M2 durch die Öffnung 3 ebenfalls in die Werkzeugform 1 eingespritzt oder eingepresst. Figur 1B zeigt den Zustand, nach dem das erste Kunststoffformmaterial M1 gerade vollständig in die Werkzeugform 1 eingespritzt wurde und das zweite Kunststoffformmaterial M2 durch die Öffnung 3 gelangt. Somit wird dann das zweite Kunststoffformmaterial M2 ebenfalls durch die Öffnung 3 in die Werkzeugform 1 eingespritzt.

Durch das bereits erfolgte Erstarren des ersten Kunststoffformmaterials M1 an der Innenwandung 5 kann ein Hohlraum 6 entstehen, in den das zweite Kunststoffformmaterial M2, wie es in der Figur 1C dargestellt ist, gelangt. Die beiden Kunststoffformmaterialien M1, M2 in geeigneter Dosierung, sind nun in der Werkzeugform 1, wobei das zweite Kunststoffformmaterial M2 einen Kern der sich ergebenden Filterendscheibe bildet und das erste Kunststoffformmaterial M1 die äußere Oberfläche bildet. Hinsichtlich der Anordnung der Werkzeugform 1 und dem Extruder 2 sowie der Einspritzgeschwindigkeiten der beiden nacheinander eingeführten Kunststoffformmaterialien M1, M2, können diese Faktoren derart eingestellt werden, dass sich eine gewünschte Verteilung der Materialien im Innenraum 4 der Werkzeugform 1 ergeben.

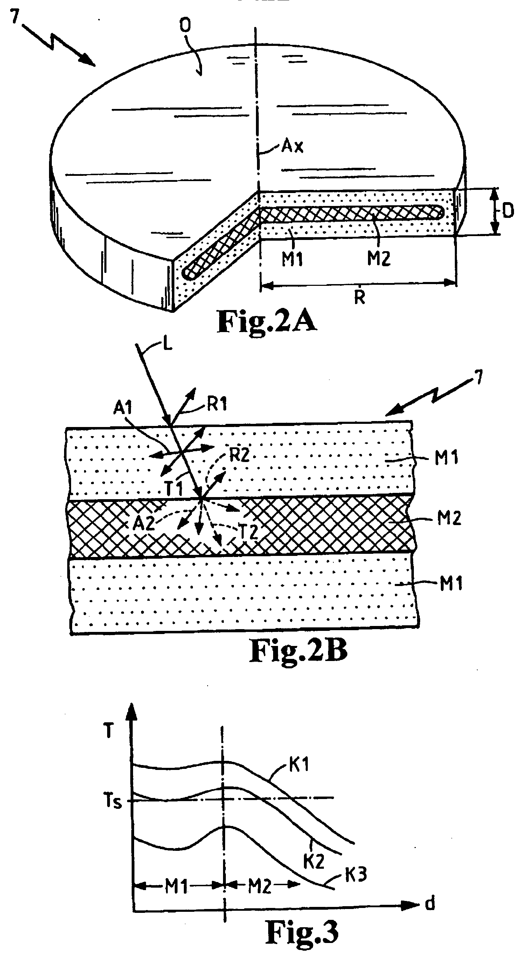

In der Figur 2 ist eine entsprechend hergestellte Filterendscheibe 7 näher dargestellt. Die Figur 2A zeigt eine perspektivische Ansicht einer Ausführungsform einer Filterendscheibe, die beispielsweise im Wesentlichen kreisrund mit einem Radius R und einer Dicke D ausgeführt ist. Die Filterendscheibe 7 weist zwei Materialien auf, wovon ein erstes Material M1 eine Außenhülle bildet und ein zweites Material M2 einem Kern der Filterendscheibe 7 entspricht. Die Oberfläche O der Filterendscheibe 7 hat daher im Wesentlichen lediglich das Material M1.

Zum Einen kann die Materialkombination derart gewählt werden, dass der hygroskopische Kern M2 von einer Feuchtigkeits-abschirmenden Hülle M1 ummantelt ist. Da häufig verwendetes Polyamid hygroskopisch ist, und daher Feuchtigkeit aus der Luft aufnimmt, kommt es ohne die Schutzhülle aus M1 zu Störungen in weiteren Verarbeitungsschritten. In einem Schweißprozess, der oft notwendig ist, um die Endscheibe 7 mit einem Filterbalg zu verbinden, kann es bei vorliegender innerer Feuchtigkeit zu einer Blasenbildung kommen, die unerwünscht ist. Das Wasser im Endscheibenbauteil schäumt dann das flüssige geschmolzene kunststoffformmaterial auf, und eine sichere und dichte Verschweißung ist kaum noch möglich.

In der Vergangenheit mussten vorgefertigte Endscheiben daher aufwändig getrocknet werden. Diese sonst notwendigen zusätzlichen Maßnahmen sind bei der vorgeschlagenen Variante, bei der das erste im Monosandwichverfahren eingespritzte Kunststoffformmaterial wasser- oder wasserdampfundurchlässig ist, nicht notwendig. Entsprechende geeignete Materialien sind zum Beispiel aus der Kunststofffolienherstellung bekannt.

Zum Anderen können die Kunststoffformmaterialien auch weitere funktionelle Eigenschaften aufweisen, die für die Weiterverarbeitung und Herstellung von Filterelementen von Vorteil sind. Es ist insbesondere möglich, die Wärmeabsorptionseigenschaften gezielt einzustellen.

In der Figur 2B ist ein Ausschnitt eines Querschnittes der Filterendscheibe 7 dargestellt. Dabei ergibt sich eine Abfolge von Materialschichten zu M1, M2 und M1. Die Materialien M1 und M2 sind beispielsweise derart gewählt, dass das äußere Material M1 bzw. das erste Kunststoffformmaterial M1 im erstarrten Zustand hinsichtlich der Wärmetransmissions-, Absorptions- und Reflektionseigenschaften unterschiedlich von dem Material M2 ist. Die beiden Materialien sind derart gewählt, dass das innere Kernmaterial M2 stärker eine einfallende Strahlung in Wärme umsetzt als das Material M1. Darüber hinaus kann die Wasserundurchlässigkeit der äußeren Schicht M1 vorliegen.

Zur Erläuterung ist beispielsweise Infrarotstrahlung L als Pfeil angedeutet, welches auf die Filterendscheibe 7 eingestrahlt wird. Beispielsweise ist es notwendig, bis zu einer gewissen Tiefe, die Materialien M1 und M2 aufzuschmelzen, um in das angeschmolzene Kunststoffmaterial, ein gefaltetes Filtervlies-Material als Filtermedium, hineinzudrücken und mit der Filterendscheibe 7 zu verbinden. Dabei ist es insbesondere gewünscht, dass ein etwa 1-2 mm tiefer Bereich von der Oberfläche der Filterendscheibe aus betrachtet aufgeschmolzen wird. Dies muss möglichst schnell erfolgen, um den Herstellungsprozess der sich ergebenden Filter zu beschleunigen.

Sofern keine Feuchtigkeit in dem inneren Material M2 vorliegt, lässt sich ein gut kontrollierbares Aufschmelzen erreichen. Ansonsten würden Blasen und Schaum entstehen, der die weitere Bearbeitung stört. Die äußere "Schutzschicht" M1 gewährleistet, dass nach der Herstellung und Lagerung der Endscheibenrohlinge keine Einlagerung von Wasser oder Feuchtigkeit in das hygroskopische Kernmaterial M2 auftreten kann.

Im Wesentlichen ergeben sich drei Prozesse, wenn Strahlung auf ein Material eingestrahlt wird. Einerseits werden Teile der eingestrahlten Strahlung L reflektiert. Dies ist an der Grenzfläche zwischen beispielsweise Luft und dem ersten Material M1 durch den Pfeil R1 angedeutet. An der Grenzfläche zwischen den Materialien M1 und M2 kann ebenfalls Reflektion auftreten, was durch den Pfeil R2 dargestellt ist. Darüber hinaus können ebenfalls Anteile des Lichtes oder der Strahlung L das jeweilige Material durchlaufen oder transmittieren. Dies wird durch den Pfeil T1 bzw. T2 in der Zeichnung und auch allgemein durch einen Transmissionsgrad ausgedrückt. Darüber hinaus ergibt sich eine Absorption in den Materialien beim Durchlauf der Strahlung. Die Pfeile A1 illustrieren die Absorption im oberen Material M1 und die Pfeile A2, die gestrichelt dargestellt sind, die Absorption der Strahlung im Material M2. Wie bereits eingangs angedeutet wurde, können diese Eigenschaften hinsichtlich der Bestrahlung von Materialien durch den Absorptionsgrad A, den Transmissionsgrad T und den Reflektionsgrad R ausgedrückt werden. Es ergibt sich zum Beispiel der Zusammenhang: A + T + R = 1, was die wechselseitige Abhängigkeit der verschiedenen Prozesse im Material ausdrückt.

Die Materialien im Herstellungsverfahren für eine Filterendscheibe sind nun derart gewählt, dass eine einfallende Strahlung L, wie beispielsweise von einem Infrarotstrahler für ein Schweißverfahren, das zweite tiefer liegende im Kern der Filterendscheibe 7 vorliegende Material M2 stärker erhitzt als das oberflächlich angeordnete Kunststoffformmaterial M1.

In der Figur 3 ist ein Temperaturverlauf entlang beispielsweise einer Achse Ax der in Figur 2 dargestellten Filterendscheibe 7 bei verschiedenen Einstrahlungsdauem von Infrarotstrahlung dargestellt. Auf der X-Achse ist die Tiefe d illustriert und auf der Y-Achse der Temperaturverlauf T. Dabei sind drei Kurven angedeutet, wobei die obere Kurve K1 der längsten Bestrahlungszeit entspricht und die Kurven K2 und K3 jeweils geringere Bestrahlungszeiten der Kunststoffendscheibe haben. Es ist die Schmelztemperatur Ts als gestrichelte Linie dargestellt. Ferner ergeben sich zwei Abschnitte M1 und M2, die den beiden Materialien entsprechen. Bei einer Eindringtiefe d = 0 liegt beispielsweise die Oberfläche O der Filterendscheibe 7 vor.

Man erkennt, dass die maximale Temperatur jeweils in der Nähe der Grenzfläche zwischen den beiden Materialien M1 und M2 vorliegt. Dadurch kann z.B. die Grenzfläche schnell erwärmt werden und aufschmelzen ohne die Oberfläche zu "verbrennen". Beispielsweise kann das Polyamid mit der Bezeichnung PA6 als geeignetes Material für Filterendscheiben verwendet werden. Der äußere Materialbereich M1 entspricht dabei beispielsweise naturfarbenem Polyamid, während der Kernbereich mit dem zweiten Kunststoffformmaterial M2 aus Polyamid, das schwarz, beispielsweise mit Rußpartikeln eingefärbt ist. Auch modifiziertes Polypropylen vom Typ Admer QB510E wäre als wasserundurchlässiges äußeres Material geeignet. Somit ergibt sich eine deutlich höhere Absorption der eingestrahlten Strahlung durch das Kernmaterial M1, so dass sich in der Nähe der Grenzfläche eine höhere Temperatur entwickelt als im Oberflächenbereich.

Die Bestrahlungsdauer kann nun derart eingestellt werden, dass sich zumindest das Material M1 derart aufheizt, dass der Schmelzpunkt erreicht wird. Die Kurve K2 entspricht beispielsweise gerade einer geeigneten Bestrahlungszeit. Man erkennt aus der Figur 3 ferner, dass die Temperatur in dem ersten äußeren Material M1 sehr homogen vorliegt und nur unwesentlich in Richtung zu dem zweiten Material abnimmt. Dies ist von Vorteil, da in die aufgeschmolzene Materialschicht M1 und nur zu geringem Anteil in die geschmolzene Materialschicht M2 das entsprechende Filtervlies-Material eingedrückt wird und einen fluiddichten Abschluss bilden soll.

Eine beispielsweise gemäß einem Monosandwich-Verfahren hergestellte Filterendscheibe aus zwei Komponenten mit einem inneren Kern und einer äußeren Schicht, ist daher besonders gut geeignet, effizient und schnell Filter auszubilden.

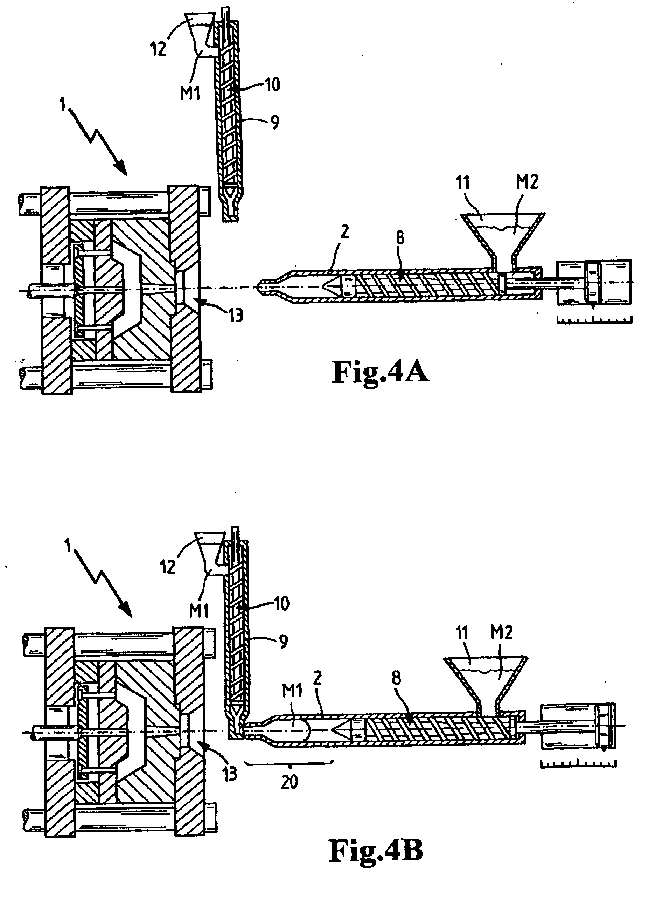

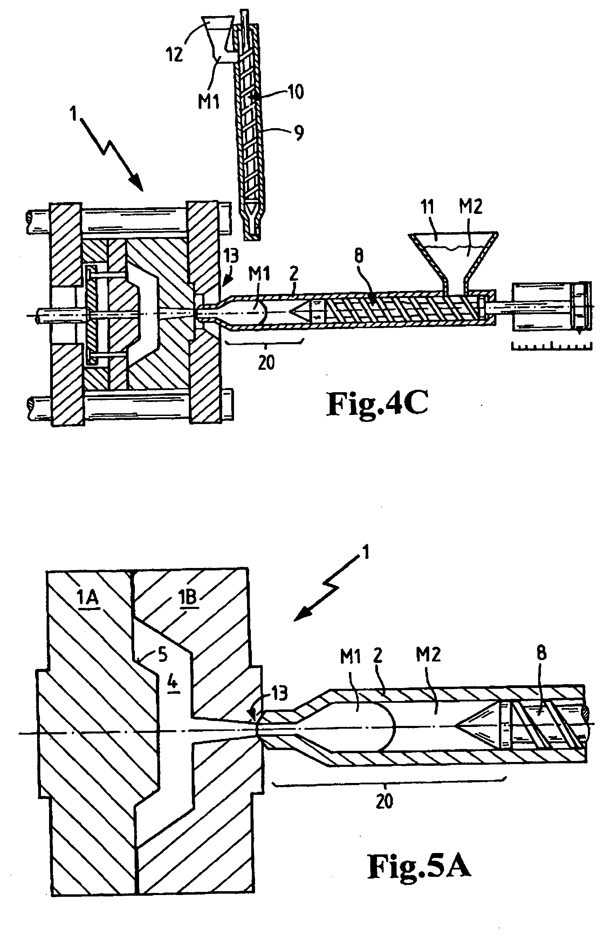

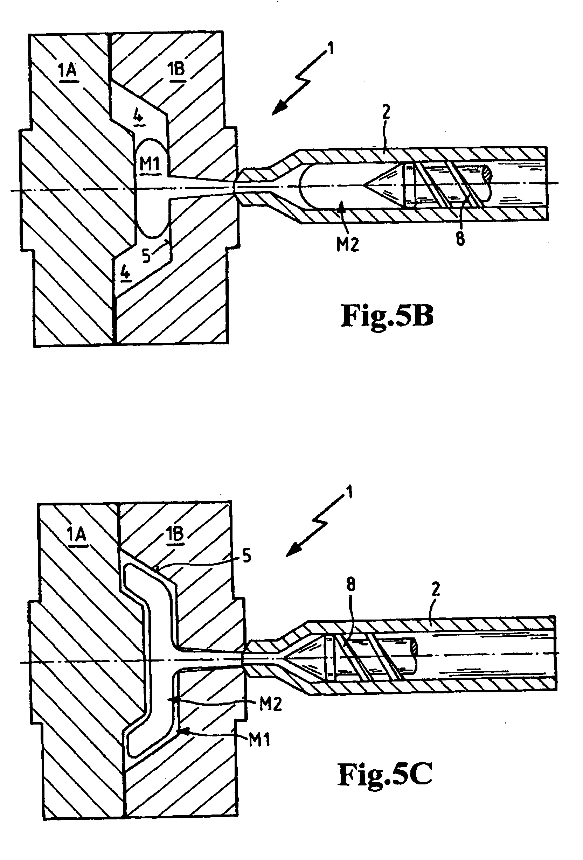

In den Figuren 4 und 5 ist ein beispielhaftes Monosandwich-Verfahren für die Herstellung einer Filterendscheibe dargestellt. Dabei zeigen die Figuren 4A-4C vorbereitende Schritte, um einen Extruder mit der geeigneten Kunststoffformmaterialmischung zu befüllen und die Figuren 5A-5C verschiedene Prozesszustände während des Einspritzvorganges der beiden Kunststoffformmaterialien.

In der Figur 4 ist eine Werkzeugform 1 mit einem Einfüllstutzen 13 dargestellt. Es sind ferner zwei Extruder 2, 9 vorgesehen, wobei der Extruder 2, welcher in der Figur 4 horizontal angeordnet ist, der Hauptextruder ist. An die beiden Extruder 2, 9 sind Materialreservoirs 11, 12 angekoppelt, die das jeweilige Kunststoffformmaterial M2 und M1 aufweisen. Der Hauptextruder 2 ist dabei mit dem zweiten Kunststoffformmaterial M2 befüllbar, also das Material, welches hinsichtlich der Wärmeabsorption und Umsetzeigenschaften eine stärkere Wärmeentwicklung bei Bestrahlung hervorruft. Die beiden Extruder 2, 9 haben ferner geeignete Transportschnecken 8, 10 oder andere Einrichtungen, um das thermoplastische Material M1 bzw. M2 in Richtung der jeweiligen Austrittsöffnung zu transportieren. Diese sind mit den Bezugszeichen 8 und 10 versehen. Zunächst sind, wie in Figur 4A näher dargestellt ist, beide Extruder 2, 9 jeweils vollständig mit dem Kunststoffformmaterial M1, M2 gefüllt.

Wie in der Figur 4B dargestellt ist, wird zunächst die Öffnung des Hauptextruders 2 mit der Öffnung des sekundären Extruders 9 verbunden. Anschließend wird in einen vorderen Bereich 20 des Hauptextruders 2 das erste Kunststoffformmaterial M1 eingespritzt. Somit ergibt sich sowohl die Materialmischung M1 und M2 wie auch die Abfolge für einen darauf folgenden Einspritzvorgang in die Werkzeugform 1. Die Spitze des Hauptextruders 2 ist somit mit dem ersten Kunststoffformmaterial M1 gefüllt. Daran schließt sich das zweite Kunststoffformmaterial M2 an.

Anschließend wird der sekundäre Extruder 9 getrennt, und die Spitze des Hauptextruders 2 wird in den Einfüllstutzen 13 der Werkzeugform eingesetzt. Dies ist in der Figur 4C näher dargestellt. Es ergibt sich auch, dass im vorderen Bereich der Spitze 20 die beiden Materialabfolgen M1 und M2 gemäß ihrem anschließenden Einspritzen in die Werkzeugform 1 vorliegen.

Die Figur 5 zeigt detaillierter den Einspritzvorgang der beiden Materialien M1 und M2 in die Werkzeugform.

In der Figur 5A ist der vorbereitete Extruder 2 an den Einfüllstutzen 13 der Werkzeugform 1 angesetzt. Die Werkzeugform 1 weist zwei Teile 1A und 1B auf, die gemeinsam einen Innenraum 4 mit einer Innenraumwandung 5 bilden. Der Extruder 2 hat im vorderen Bereich 20 die beiden Materialien M1 und M2, welche durch einen Stempel oder eine andere geeignete Fördereinrichtung 8, z.B. Schnecke, eingespritzt werden. Ferner wird, falls thermoplastisches Material als Kunststoffformmaterial verwendet wird, die Extruderspritze oder der gesamte Extruder 2 entsprechend aufgeheizt.

Die Figur 5B zeigt den Zustand, in dem das erste Kunststoffformmaterial M1 durch den Stempel 8 im Extruder 2 bereits teilweise in die Werkzeugform 1 eingeführt ist. Dabei schmiegt sich das Material M1 im Wesentlichen an der Oberfläche 5 der Innenwandung im Innenraum 4 die Werkzeugform 1 an.

Schließlich wird, wie in der Figur 5C dargestellt ist, auch das zweite Kunststoffformmaterial M2 in die Werkzeugform 1 eingespritzt. Durch das Abkühlen und Erstarren des ersten Kunststoffformmaterials an der Werkzeugforminnenwandung 5, verbleibt das zweite Kunststoffformmaterial im Wesentlichen im Inneren der sich ergebenden Filterendscheibe.

Man erkennt, dass die Werkzeugform 1A, 1 B selbst nicht bewegt oder verändert wird. Der innere Hohlraum 4 hat während des Einspritzvorgangs immer dasselbe Volumen. Ein Formung oder Verteilung des eingespritzten Materials durch eine Veränderung der Innenwandung 5 erfolgt nicht. Der Hohlraum 4 und die Form des Werkzeugs 1A, 1 B bleibt konstant.

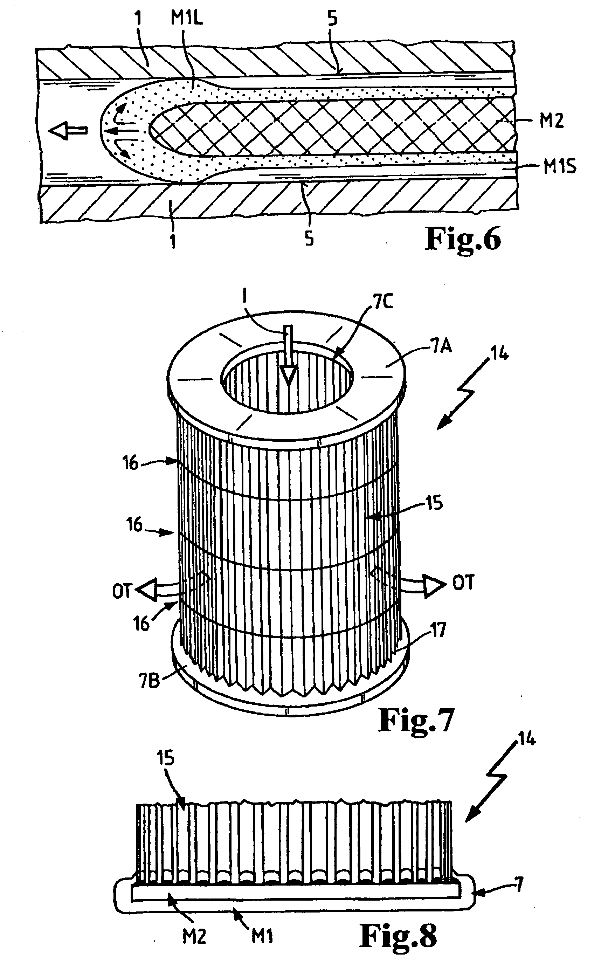

Die Figur 6 zeigt etwas detaillierter die Vorgänge beim Einspritzen der Materialmischung. Figur 6 zeigt einen Querschnitt durch die Werkzeugform 1 mit einer jeweiligen Oberfläche 5. Die Oberfläche 5 ist relativ kühl, so dass beim Einspritzen des ersten Kunststoffformmaterials M1 an der Oberfläche 5 die Temperatur unterhalb des Schmelzpunktes Ts sinkt, so dass sich eine Schicht M1S von gefestigtem ersten Kunststoffformmaterial M1S bildet. Die in der Figur 6 dargestellten Pfeile stellen die Fließ- bzw. Einspritzrichtung des Kunststoffformmaterials M1 L im flüssigen Zustand dar. Da das Abkühlen nicht abrupt erfolgt, ergibt sich beim nachfolgenden Einspritzen des zweiten Kunststoffformmaterials M2 ein innerer Bereich aus dem zweiten Kunststoffformmaterial M2. Die Geometrie der Werkzeugform 1 und die Einspritzgeschwindigkeit sind derart gewählt, dass sich das erste und zweite Kunststoffformmaterial nicht vermischen, sondern wie in der Figur 6 dargestellt ist, die äußere Schicht der sich ergebenden Filterendscheibe aus dem ersten Material besteht (M1S).

In der Figur 7 ist ein Kraftfahrzeugbetriebsmittelfilter, beispielsweise ein Öl- oder Luftfilter mit einer entsprechend hergestellten Filterendscheibe, dargestellt. Das entsprechende Fluidfilter 14 hat eine obere und eine untere Filterendscheibe 7A, 7B, wobei beispielsweise die obere Filterendscheibe 7A eine Öffnung 7C zum Einführen von Fluid, wie beispielsweise Kraftstoff oder Luft aufweist. Zwischen den beiden Filterendscheiben 7A, 7B ist gefaltetes Filtervlies-Material 15 zylinderförmig angeordnet, das beispielsweise ferner durch geeignete Verstärkungen 16 in Form gehalten werden kann.

Eine entsprechende Filterung von einströmendem Fluid I in den Innenraum des sich ergebenden Zylinders aus dem Filtermaterial 15, tritt durch das Filtermaterial als gereinigtes Fluid OT aus. Dies ist durch die Pfeile I und OT in der Figur 7 angedeutet. Die Flussrichtung kann selbstverständlich auch von Außen nach Innen erfolgen und damit die Filtration vom Außenmantel des Filterelements aus. Um die Filterendscheiben 7A und 7B mit dem Filtermaterial 5 fluiddicht zu verbinden, wird wie zuvor angedeutet, die jeweilige Filterendscheibe auf der Seite zum Filtermaterial 15 hin erwärmt, so dass sich an der Oberfläche eine Schmelze des Kunststoffformmaterials der Filterendscheibe 7A, 7B bildet. Anschließend wird die Kante oder das Profil des gefalteten Filtervlies in die Schmelze gedrückt, welche anschließend erstarrt. In der Regel ergeben sich dadurch gute dichte Übergänge.

In der Figur 8 ist ein Querschnitt durch ein entsprechendes Fluidfilter 14 ausschnittweise dargestellt. Dabei ist in der Figur 8 die Situation dargestellt, in der das Filtermedium 15, das angeschmolzene Material der Filterendscheibe 7 hineingedrückt wurde und erstarrt ist. Man sieht in der Figur 8, dass durch das Verdrängen beim Hineindrücken der Faltprofile in die Filterendscheibe 7 zwischen den Faltungen und dem Filterendscheibenmaterial ein dichter Abschluss entsteht. Man sieht in der Figur 8 ferner, dass auch das zweite Kunststoffformmaterial M2 durch Bestrahlung angeschmolzen werden kann, wodurch die Eindringtiefe der Faltungen 15 erhöht wird.

Damit eine entsprechende Filterendscheibe und der resultierende Kraftfahrzeugfilter auch den ästhetischen Ansprüchen der Kunden entspricht, können die beiden Materialien M1 und M2 gleichfarbig eingefärbt werden, ohne deren Eigenschaften hinsichtlich der Wärmeumsetzung von eingestrahlter Strahlung wesentlich zu ändern.

Um die Dichtung zwischen den Faltenprofilkanten und den Endscheiben 7A, 7B zu verbessern, kann die jeweilige Endscheibe zusätzlich mit einem Dichtungselement versehen werden.

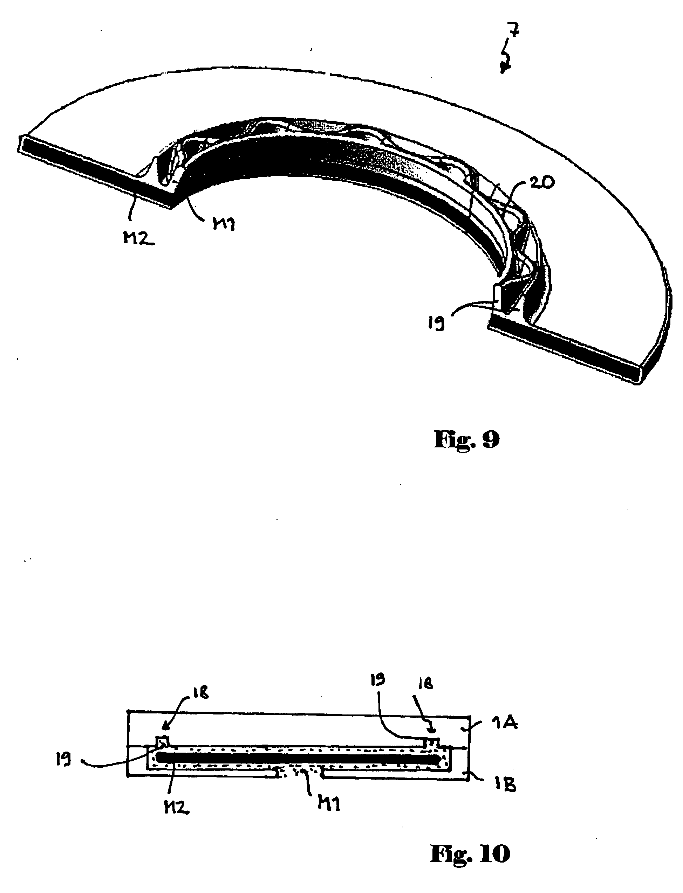

Die Figur 9 zeigt eine angeschnittene perspektivische Ansicht einer weiteren Ausführungsform einer Filterendscheibe 7. Dabei ist an der Stirnseite, welche in der Orientierung der Figur 9 nach oben weist, ein Dichtungselement 19 vorgesehen, welches ausschließlich aus dem äußeren Kunststoffformmaterial M1 gebildet ist. Das Dichtungselement 19 umfasst zwei konzentrische Ringe 19, die von der Fläche der Endscheibe 7 abstehen. Dazwischen ist ein geschlängelter Materialsteg 20 vorgesehen. Das äußere Kunststoffformmaterial M1, welches auch die das Dichtungselement 19 umfasst, ist vorzugsweise aus einem weicheren Kunststoff als das innere Kernmaterial M2. Das Kernmaterial M2 ist schwarz dargestellt. Diese flexible Dichtungsgeometrie 19 kann an die jeweiligen Gegebenheiten hinsichtlich der darauf anzubringenden Faltungen angepasst werden. Die abstehenden Stege 19, 20 werden dann geschmolzen und verbinden sich, wie es in der Figur 8 illustriert ist, mit dem Filtervlies. Durch das zusätzliche aufgeschmolzene Material der Dichtungsstege kann mehr Kunststoffmaterial mit den Faltenprofilen verbunden werden, und es entsteht eine verbesserte Abdichtung zwischen dem Faltenvlies und der Endscheibe.

Es wird also eine Endscheibe 7 mit integrierter Dichtung geschaffen, wobei das äußere Material in der Regel höherwertiger und teuerer ist. Durch die Herstellung in einem Monosandwich- oder Co-Injektionsverfahren wird der erhöhte Einsatz von geringerwertigem Kernmaterial aufwandsgünstig möglich.

Die Figur 10 zeigt schematisch eine für die Herstellung der in Figur 9 dargestellten Ausführungsform für eine Filterendscheibe geeignet ausgestaltete Werkzeugform 1. Das Werkzeug 1A, 1B ist zweiteilig und bildete einen konstanten Hohlraum, in den die Kunststoffformmaterialien eingespritzt werden. Es sind in der oberen Werkzeughälfte 1A Aussparungen 18 vorgesehen, in die das zuerst eingespritzte Kunststoffformmaterial M1 zum Ausbilden des Dichtelements 19 eindringt. Das zweite Kunststoffformmaterial M2 bildet den Kern der Filterendscheibe und ist schwarz dargestellt. Man kann durch die Ausgestaltung der Aussparungen besonders dünne von der Scheibe abstehende Dichtstege oder Dichtstrukturen erreichen und damit Material einsparen. Vorzugsweise sind mehrere konzentrische Aussparungen vorgesehen, um viele abstehenden Dichtstege zu schaffen.

## Patentansprüche

1. Verfahren zum Herstellen einer Filterendscheibe (7), insbesondere für einen Fluidfilter (14) eines Kraftfahrzeugs, wobei ein erstes Kunststoffformmaterial (M1) und ein zweites Kunststoffformmaterial (M2) nacheinander derart nach einem Monosandwichverfahren oder Co-Injektionsverfahren in eine Werkzeugform (1) gespritzt werden, dass das zweite Kunststoffformmaterial (M2) im Wesentlichen von dem ersten Kunststoffformmaterial (M1) umschlossen wird.

2. Verfahren nach Anspruch 1, wobei ein inneres Volumen der Werkzeugform (1), in welches das erste und das zweite Kunststoffformmaterial (M2) eingespritzt wird, während des Einspritzens konstant ist.

3. Verfahren nach Anspruch 1 oder 2, wobei das erste Kunststoffformmaterial (M1) im festen Zustand wasser- und/oder wasserdampfundurchlässig ist.

4. Verfahren nach einem der Ansprüche 1 - 3, wobei das zweite Kunststoffformmaterial (M2) im festen Zustand hygroskopische Eigenschaften hat.

5. Verfahren nach einem der Ansprüche 1 - 4, wobei die Werkzeugform (1) derart geformt ist, dass beim Einspritzen das erste Kunststoffformmaterial (M1) in Aussparungen (18) der Werkzeugform (1) eindringt und diese derart ausfüllt, dass aus dem verfestigten ersten Kunststoffformmaterial (M1) ein von einer Stirnseite der Filterendscheibe (7) abstehendes Dichtungselement (19) vorliegt.

6. Verfahren nach Anspruch 5, wobei das von der Filterendscheibe (7) abstehende Dichtungselement (19) ausschließlich das erste Kunststoffformmaterial (M1) umfasst.

7. Verfahren nach einem der Ansprüche 1 - 6, wobei das erste Kunststoffformmaterial (M1) im festen Zustand weicher und/oder flexibler ist als das zweite Kunststoffformmaterial (M2) im festen Zustand.

8. Verfahren nach einem der Ansprüche 1 - 7, wobei das zweite Kunststoffformmaterial (M2) eine Strahlung (L) mit vorgegebenen Strahlungseigenschaften stärker in Wärme umsetzt als das erste Kunststoffformmaterial (M1).

9. Verfahren nach einem der Ansprüche 1 - 8, wobei das Einspritzen derart erfolgt, dass das erste Kunststoffformmaterial (M1) eine äußere Oberfläche (O) der Filterendscheibe (7) bildet.

10. Verfahren nach einem der Ansprüche 1 - 9, ferner umfassend: Einfärben des ersten und des zweiten Kunststoffformmaterials (M1, M2) derart, dass Absorptions-, Reflektions- und/oder Transmissionseigenschaften für die Strahlung im Wesentlichen unverändert bleiben und die beiden Kunststoffformmaterialien (M1, M2) dieselbe Farbe aufweisen.

11. Verfahren zum Herstellen eines Fluidfilters (14) umfassend ein Verfahren nach einem der Ansprüche 1 - 10 und die Schritte: Bestrahlen der Filterendscheibe (7) durch eine Strahlung (L) mit den vorgegebenen Strahlungseigenschaften zum Schmelzen des ersten Kunststoffformmaterials (M1), und Aufbringen eines Filtermaterials (15) auf das zumindest teilweise geschmolzene erste Kunststoffformmaterial (M1).

12. Verfahren nach Anspruch 11, wobei ein gefalteter Rand (17) des Filtermaterials (15) in das geschmolzene erste Kunststoffformmaterial (M1) gedrückt wird.

13. Filterendscheibe (7), insbesondere für einen Fluidfilter (14) eines Kraftfahrzeugs, welche nach einem Monosandwichverfahren oder Co-Injektionsverfahren gefertigt ist und ein erstes äußeres Kunststoffformmaterial (M1) und ein zweites inneres Kunststoffformmaterial (M2) aufweist, wobei das zweite Kunststoffformmaterial (M2) von dem ersten Kunststoffformmaterial (M1) umschlossen ist und wobei das erste Kunststoffformmaterial (M1) wasser- und/oder wasserdampfundurchlässig ist.

14. Filterendscheibe (7) nach Anspruch 13, wobei das zweite Kunststoffformmaterial (M2) hygroskopisch ist.

15. Filterendscheibe (7) nach Anspruch 13 oder 14, wobei das erste Kunststoffformmaterial (M1) eine geschlossene wasser- und/oder wasserdampfdichte äußere Oberfläche (O) der Filterendscheibe (7) bildet.

## Claims

1. Method for manufacturing a filter end disk (7), in particular for a fluid filter (14) of a motor vehicle, wherein a first plastic mold material (M1) and a second plastic mold material (M2) are injected successively according to a monosandwich method or co-injection method into a mold (1) in such a way that the second plastic mold material (M2) is substantially enclosed by the first plastic mold material (M1).

2. Method according to claim 1, wherein an inner volume of the mold (1), into which the first and the second plastic mold material (M2) are injected, remains constant during the injection.

3. Method according to claim 1 or 2, wherein the first plastic mold material (M1) is water and/or water-vapor impermeable in solid state.

4. Method according to one of the claims 1-3, wherein the second plastic mold material (M2) has hygroscopic properties in solid state.

5. Method according to one of the claims 1-4, wherein the mold (1) is formed in such a way that during injection the first plastic mold material (M1) penetrates into recesses (18) of the mold (1) and fills them in such a way that from the solidified first plastic mold material (M1) a seal element (19) protruding from a front side of the filter end disk (7) is provided.

6. Method according to claim 5, wherein the seal element (19) protruding from the filter end disk (7) encloses exclusively the first plastic mold material (M1).

7. Method according to one of the claims 1-6, wherein the first plastic mold material (M1) is softer and/or flexibler in solid state than the second plastic mold material (M2) in solid state.

8. Method according to one of the claims 1-7, wherein the second plastic mold material (M2) converts a radiation (L) with predefined radiation properties stronger into heat than the first plastic mold material (M1).

9. Method according to one of the claims 1-8, wherein the injection is realized in such a way that the first plastic mold material (M1) forms an outer surface (O) of the filter end disk (7).

10. Method according to one of the claims 1-9, further comprising: colorizing of the first and the second plastic mold material (M1, M2) in such a way that absorption, reflection and/or transmission properties for the radiation remain substantially unchanged and that the two plastic mold materials (M1, M2) feature the same color.

11. Method for manufacturing a fluid filter (14) comprising a method according to one of the claims 1-10 and the following steps: irradiation of the filter end disk (7) by a radiation (L) with the predefined radiation properties for melting the first plastic mold material (M1) and applying a filter material (15) to the at least partially melted first plastic mold material (M1).

12. Method according to claim 11, wherein a folded edge (17) of the filter material (15) is pressed into the melted first plastic mold material (M1).

13. Filter end disk (7), in particular for a fluid filter (14) of a motor vehicle which is manufactured according to a monosandwich method or co-injection method and features a first outer plastic mold material (M1) and a second inner plastic mold material (M2), wherein the second plastic mold material (M2) is enclosed by the first plastic mold material (M1) and wherein the first plastic mold material (M1) is water and/or water-vapor impermeable.

14. Filter end disk (7) according to claim 13, wherein the second plastic mold material (M2) is hygroscopic.

15. Filter end disk (7) according to claim 13 or 14, wherein the first plastic mold material (M1) forms a closed water and/or water-vapor tight outer surface (O) of the filter end disk (7).

## Revendications

1. Procédé de fabrication d'un disque d'extrémité de filtre (7), en particulier pour un filtre à fluides (14) d'un véhicule automobile, un premier matériau de moulage en matière plastique (M1) et un deuxième matériau de moulage en matière plastique (M2) étant injectés l'un après l'autre dans un moule (1) selon un procédé monosandwich ou un procédé de co-injection de sorte que le deuxième matériau de moulage en matière plastique (M2) soit entouré essentiellement du premier matériau de moulage en matière plastique (M1).

2. Procédé selon la revendication 1, un volume intérieur du moule (1) dans lequel sont injectés le premier et le deuxième matériau de moulage en matière plastique (M2) restant constant pendant l'injection.

3. Procédé selon la revendication 1 ou 2, le premier matériau de moulage en matière plastique (M1) à l'état solide étant imperméable à l'eau et/ou à la vapeur d'eau.

4. Procédé selon l'une des revendications 1 à 3, le deuxième matériau de moulage en matière plastique (M2) à l'état solide présentant des propriétés hygroscopiques.

5. Procédé selon l'une des revendications 1 à 4, le moule (1) ayant une forme telle que, lors de l'injection, le premier matériau de moulage en matière plastique (M1) pénètre dans des évidements (18) du moule (1) les et remplisse de manière à former, à partir du premier matériau de moulage en matière plastique (M1) ayant durci, un élément d'étanchéité (19) dépassant d'une face frontale du disque d'extrémité de filtre (7).

6. Procédé selon la revendication 5, l'élément d'étanchéité (19) dépassant du disque d'extrémité de filtre (7) entourant exclusivement le premier matériau de moulage en matière plastique (M1).

7. Procédé selon l'une des revendications 1 à 6, le premier matériau de moulage en matière plastique (M1) à l'état solide étant plus souple et/ou plus flexible que le deuxième matériau de moulage en matière plastique (M2) à l'état solide.

8. Procédé selon l'une des revendications 1 à 7, le deuxième matériau de moulage en matière plastique (M2) convertissant en chaleur un rayonnement (L) présentant des propriétés de rayonnement prédéfinies de manière plus intense que le premier matériau de moulage en matière plastique (M1).

9. Procédé selon l'une des revendications 1 à 8, l'injection étant réalisée de telle manière que le premier matériau de moulage en matière plastique (M1) forme une surface extérieure (O) du disque d'extrémité de filtre (7).

10. Procédé selon l'une des revendications 1 à 9, comprenant également : coloration du premier et du deuxième matériaux de moulage en matière plastique (M1, M2) de sorte que les propriétés d'absorption, de réflexion et/ou de transmission restent essentiellement inchangées pour le rayonnement et que les deux matériaux de moulage en matière plastique (M1, M2) aient la même couleur.

11. Procédé de fabrication d'un filtre à fluides (14), comprenant un procédé selon l'une des revendications 1 à 10 et les étapes suivantes : irradiation du disque d'extrémité de filtre (7) avec un rayonnement (L) présentant des propriétés de rayonnement prédéfinies en vue de faire fondre le premier matériau de moulage en matière plastique (M1) et de mettre en place un matériau filtrant (15) sur le premier matériau de moulage en matière plastique (M1) ayant fondu, au moins partiellement.

12. Procédé selon la revendication 11, un bord plié (17) du matériau filtrant (15) étant enfoncé dans le premier matériau de moulage en matière plastique (M1) ayant fondu.

13. Disque d'extrémité de filtre (7), en particulier pour un filtre à fluides (14) d'un véhicule automobile, fabriqué selon un procédé monosandwich ou un procédé de co-injection et étant doté d'un premier matériau de moulage extérieur en matière plastique (M1) et d'un deuxième matériau de moulage intérieur en matière plastique (M2), le deuxième matériau de moulage en matière plastique (M2) étant entouré du premier matériau de moulage en matière plastique (M1) et le premier matériau de moulage en matière plastique (M1) étant imperméable à l'eau et/ou à la vapeur d'eau.

14. Disque d'extrémité de filtre (7) selon la revendication 13, le deuxième matériau de moulage en matière plastique (M2) étant hygroscopique.

15. Disque d'extrémité de filtre (7) selon la revendication 13 ou 14, le premier matériau de moulage en matière plastique (M1) formant une surface extérieure (O) imperméable à l'eau et/ou à la vapeur d'eau du disque d'extrémité de filtre (7).
